# EUROPÄISCHE PATENTSCHRIFT

(11) **EP 0 324 904 B1**
(45) Veröffentlichungstag und Bekanntmachung des Hinweises auf die Patenterteilung: **07.01.1993**
(21) Anmeldenummer: 88117825.5
(22) Anmeldetag: 26.10.1988
(51) Int. Cl.: H02M 7/217, H02M 3/156

(54) **Netzteil zur Erzeugung einer geregelten Gleichspannung**
Power supply producing a regulated DC voltage
Alimentation pour générer une tension continue régulée

(30) Priorität: 20.01.1988 DE 3801399
(43) Veröffentlichungstag der Anmeldung: 26.07.1989
(73) Patentinhaber: Eaton GmbH, D-78555 Gosheim (DE)
(72) Erfinder: Weiss, Hans, Dipl.-Ing., D-7209 Gosheim (DE); Anders, Klaus, Dipl.-Ing., D-7209 Gosheim (DE)
(74) Vertreter: Vetter, Hans, Dipl.-Phys. Dr.

(56) Entgegenhaltungen:
- EP-A- 0 106 041
- EP-A- 0 229 950
- FR-A- 1 430 606
- SIEMENS COMPONENTS, Band 21, Nr. 3, Juni 1986, Seiten 103-107, Berlin, DE; M. HERFURTH: "TDA 4814-integrated circuit for sinusoidal line cur rent consumption"

## Beschreibung

Die Erfindung betrifft ein Netzteil zur Erzeugung einer geregelten Gleichspannung aus einer Netzwechselspannung, mit einem über eine Gleichrichteranordnung aufladbaren, die Ausgangsgleichspannung aufweisenden Kondensator und mit einem den Ausgang der Gleichrichteranordnung überbrückenden, in Abhängigkeit eines vorgebbaren Sollwerts und des Istwerts der Ausgangsspannung steuerbaren Halbleiterschalter, wobei zwischen dem Netzanschluß und dem Halbleiterschalter wenigstens ein eine Stromüberlastung der Gleichrichteranordnung verhindernder Widerstand vorgesehen ist. Ein derartiges Netzteil, auch als sogenannter Shunt-Regler bezeichnet, bei dem der Kondensator jeweils mit der gleichgerichteten Spannungshalbwelle so lange geladen wird, bis der Sollwert erreicht ist, ist aus der EP-A 229 950 bekannt. Danach wird der Halbleitschalter in den stromleitenden Zustand versetzt, so daß der Ausgang der Gleichrichteranordnung kurzgeschlossen ist und eine weitere Ladung verhindert wird. Bis zur darauffolgenden Halbwelle sinkt dann die Kondensatorspannung wieder in Abhängigkeit von angeschlossenen Verbrauchern ab.

Der Nachteil dieser bekannten Netzteile besteht insbesondere darin, daß der Halbleiterschalter zu dem Zeitpunkt in den stromleitenden Zustand versetzt wird, zu dem ein hoher Ladestrom bei gleichzeitig hoher Spannung fließt. Es entstehen dadurch steile Schaltflanken bei einem hohen Leistungsniveau, so daß viele Oberwellen erzeugt werden, die in nachteiliger Weise zu Rundfunkstörungen führen.

Eine Aufgabe der vorliegenden Erfindung besteht daher darin, ein Netzteil der eingangs genannten Gattung zu schaffen, das infolge flacherer und niedrigerer Schaltflanken ein deutlich reduziertes Störungsverhalten aufweist.

Diese Aufgabe wird erfindungsgemäß dadurch gelöst, daß dem Halbleiterschalter eine ihn im Zyklus der Netzwechselspannung oder der daraus abgeleiteten gleichgerichteten Spannungshalbwellen im Bereich niedriger Spannung in den stromlosen Zustand und bei Unterschreitung des vorgebbaren Sollwerts durch die Ausgangsspannung in den Sperrzustand versetzende Steuervorrichtung vorgeschaltet ist.

Die Vorteile dieses Netzteils bestehen insbesondere darin, daß im Schaltzeitpunkt des Halbleiterschalters das Produkt Strom mal Spannung immer extrem niedrig ist, so daß keine steilen Schaltflanken erzeugt werden und bei geringem Oberwellengehalt Rundfunkstörungen vermieden werden. Beim Schalten in den stromleitenden Zustand am Ende einer Spannungshalbwelle ist sowohl der Strom als auch die Spannung sehr niedrig. Zum Zeitpunkt des Schaltens in den Sperrzustand ist zwar der Strom hoch, jedoch die Spannung sehr niedrig. Hierdurch treten auch nur sehr geringe Verlustleistungen auf.

Durch die in den Unteransprüchen aufgeführten Maßnahmen sind vorteilhafte Weiterbildungen und Verbesserungen des im Anspruch 1 angegebenen Netzteils möglich.

Zur zyklischen Einschaltung des stromleitenden Zustands wird vorzugsweise ein Signal verwendet, das bei Erreichen oder Unterschreiten eines im Vergleich zur Scheitelspannung sehr geringen Spannungswerts durch die gleichgerichteten Spannungshalbwellen erzeugt wird. Hierdurch kann dieses Signal am Halbleiterschalter abgegriffen und einer Schwellwertstufe zugeführt werden, an deren Ausgang die den stromleitenden Zustand auslösenden Signale erzeugt werden.

Eine weitere Schwellwertstufe ist in vorteilhafter Weise zur Durchführung des Sollwert-/Istwert-Vergleichs vorgesehen, das heißt, in dieser Schwellwertstufe wird die am Kondensator anliegende Spannung mit einer intern oder extern anliegenden Referenzspannung als Sollwertspannung verglichen.

Als Schwellwertstufen können kostengünstig handelsübliche Schmitt-Trigger eingesetzt werden.

Die Auslösesignale zur Vorgabe des stromleitenden und des Sperrzutands für den Halbleiterschalter werden zweckmäßigerweise in einer dem Halbleiterschalter vorgeschalteten Speichervorrichtung gespeichert, vor allem dann, wenn es sich um dynamische Signale handelt. Als Speichervorrichtung eignet sich eine bistabile Stufe, z. B. ein Flip-Flop.

Eine zwischen den Kondensator und den Halbleiterschalter geschaltete Diode dient vorzugsweise zur Verhinderung der Entladung des Kondensators über diesen Halbleiterschalter.

Die Schwellwertstufen und der bistabile Speicher können zweckmäßigerweise als integrierter Schaltkreis oder als Mikrorechner ausgebildet sein, wobei dann weitere Funktionen noch mitintegriert sein können. So kann beispielsweise das Netzteil noch zusätzliche Bauelemente und/oder Funktionen aufweisen, die einen alternativen Betrieb als Längsregler mit einem in die Stromzuführungsleitung zum Kondensator geschalteten steuerbaren Halbleiterelement gestatten, so daß ein universellerer Einsatz für verschiedene Arten von gleichgerichteten Spannungen möglich ist. Auch kann die Baugröße beispielsweise durch die Integration noch weiter verringert werden.

Der eine Stromüberlastung der Gleichrichteranordnung verhindernde Widerstand ist zweckmäßigerweise als hochohmiger und/oder kapazitiver Widerstand ausgebildet, der in eine Wechselstromzuführung zur Gleichrichteranordnung geschaltet ist.

Ein Ausführungsbeispiel der Erfindung ist in der Zeichnung dargestellt und in der nachfolgenden Beschreibung näher erläutert. Es zeigen:
- Fig. 1: ein Schaltbild eines Netzteils als Ausführungsbeispiel und
- Fig. 2: ein Signaldiagramm zur Erläuterung der Wirkungsweise.

Eine Netzwechselspannung von 220 V am Eingang des Netzteils wird über die Reihenschaltung eines Widerstands 8 mit einem Kondensator 9 einer aus vier Dioden 11 bestehenden Gleichrichter-Brückenschaltung zugeführt. Deren Eingangsanschlüsse sind über einen Kondensator 10 von beispielsweise 47 nF überbrückt. Der Widerstand 8 weist beispielsweise einen Widerstand von 33 Ohm und der Kondensator 9 eine Kapazität von 1 µF auf, so daß durch den kapazitiven Widerstand dieses Kondensators 9 eine Stromüberlastung der Brückenschaltung verhindert und eine Begrenzung des Kurzschlußstroms erreicht wird. Entfällt der Kondensator 9, so muß der Widerstand 8 einen entsprechend höheren, eine Strombegrenzung bewirkenden Widerstandswert aufweisen, beispielsweise einige kOHM. Der Minuspol der Gleichrichter-Brückenschaltung ist mit einer Minus-Ausgangsklemme 12 und der Pluspol über eine Diode 14 mit einer Plus-Ausgangsklemme 15 verbunden. Zwischen die beiden Klemmen 12, 15 ist ein Kondensator 18 mit hoher Kapazität geschaltet (z. B. 470 µF). Weiterhin sind die ausgangsseitigen Anschlüsse der Gleichrichter-Brückenschaltung durch einen steuerbaren Halbleiterschalter 13 überbrückt, der beispielsweise als Leistungstransistor ausgebildet sein kann.

Der Pluspol der Gleichrichter-Brückenschaltung ist mit dem Eingang einer ersten, als Schmitt-Trigger ausgebildeten Schwellwertstufe 16 verbunden, die mit einer sehr kleinen Referenzspannung U1 beaufschlagt ist. Diese Referenzspannung U1 ist gemäß der Darstellung extern angelegt, sie kann selbstverständlich auf intern erzeugt werden, beispielsweise in bekannter Weise durch eine Z-Diodenanordnung. Ein verstellbarer Widerstand zur Variation dieser Referenzspannung kann ebenfalls bei Bedarf vorgesehen sein. Der Ausgang der Schwellwertstufe 16 ist mit dem Setzeingang S eines Flip-Flops 17 verbunden, dessen Ausgang an den Steuereingang des Halbleiterschalters 13 angeschlossen ist, im Falle der Ausbildung als Transistor an die Basis dieses Transistors. Weiterhin ist die am Kondensator 18 anliegende Ausgangsspannung Ua einem Eingang einer zweiten Schwellwertstufe 19 zugeführt, deren Ausgang mit dem Rücksetzeingang R des Flip-Flops 17 verbunden ist. Die Flip-Flop-Eingänge sind vorzugsweise als dynamische Eingänge ausgebildet. Die zweite Schwellwertstufe 19 ist mit einer Referenzspannung U2 beaufschlagt, die dem vorgegebenen Sollwert, also der Sollspannung, entspricht. Auch diese Spannung kann wiederum intern oder extern angelegt oder erzeugt werden und einstellbar ausgebildet sein.

Für die beiden Schwellwertstufen können handelsübliche Schmitt-Trigger verwendet werden, oder sie werden zusammen mit dem Flip-Flop oder einer ähnlich wirkenden Speichervorrichtung als integrierter Schaltkreis oder als Mikrorechner ausgebildet.

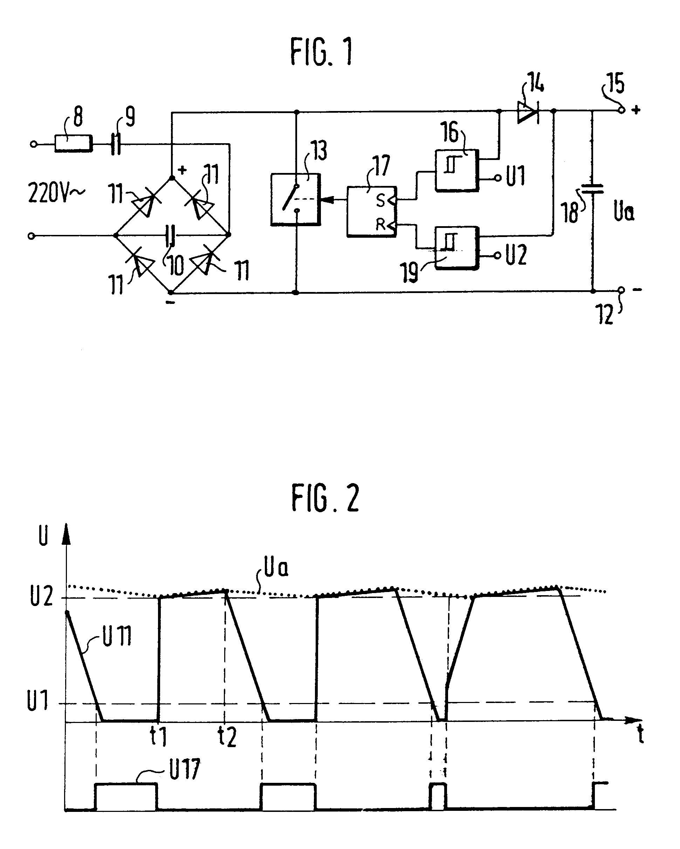

Die Wirkungsweise des in Fig. 1 dargestellten Ausführungsbeispiels soll im folgenden anhand des in Fig. 2 dargestellten Signaldiagramms erläutert werden. Zur Erläuterung der Spannungsverhältnisse wird davon ausgegangen, daß das Netzteil ausgangsseitig belastet ist, so daß die Spannung Ua am Kondensator 18 stetig abnimmt, sofern diesem kein Ladestrom zugeführt wird. Die Kondensatorspannung, also die Ausgangsspannung Ua, ist durch eine punktierte Linie dargestellt.

Zunächst befindet sich das Flip-Flop 17 im rückgesetzten Zustand und der Halbleiterschalter 13 im Sperrzustand. Unterschreitet die Ausgangsspannung U11 der Gleichrichter-Brückenschaltung den sehr niedrigen Schwellwert U1, so spricht die Schwellwertstufe 16 an, das Flip-Flop 17 wird gesetzt und der Halbleiterschalter 13 in den stromleitenden Zustand versetzt, wodurch der Ausgang der Gleichrichter-Brückenschaltung kurzgeschlossen ist. Trotz theoretisch wieder ansteigender Spannungshalbwelle wird daher die Ausgangsspannung der Brückenschaltung auf einem sehr niedrigen Wert gehalten. Eine Entladung des Kondensators 18 über den Halbleiterschalter 13 wird durch die Diode 14 verhindert.

Zum Zeitpunkt t1 erreicht die sich infolge angeschlossener Verbraucher stetig verringernde Ausgangsspannung Ua den eingestellten Sollwert U2, so daß das Flip-Flop 17 durch ein Ausgangssignal der Schwellwertstufe 19 rückgesetzt wird, so daß der Halbleiterschalter 13 wieder sperrt. Die Ausgangsspannung des Brückengleichrichters steigt daher bis zur Kondensatorspannung des Kondensators 18 an und lädt diesen weiter auf, so daß sich die Ausgangsspannung Ua erhöht. Zum Zeitpunkt t2 wird der Ladevorgang beendet, da die sich wieder verringernde Halbwellenspannung unter den Wert der Kondensatorspannung 18 absinkt.

Dieser Vorgang wiederholt sich nun bei jeder Spannungshalbwelle, wobei die Einschaltzeitpunkte des Halbleiterschalters 13 zyklisch erfolgen und von der Frequenz der eingelegten Wechselspannung abhängen. Die Ausschaltzeitpunkte dieses Halbleiterschalters werden dagegen von der Entladung des Kondensators 18, also von der angelegten Last, bestimmt. Je größer die Entladung, desto früher der Einschaltzeitpunkt für den Ladezeitpunkt im darauffolgenden Zyklus. Die Einschalt- und Ausschaltzeitpunkte des Halbleiterschalters 13 erfolgen dabei jeweils bei Vorliegen sehr geringer Spannungswerte, so daß eine geringe Verlustleistung und ein geringer Oberwellengehalt erreicht wird, wodurch Rundfunkstörungen weitgehend vermieden werden.

Variationen der dargestellten Schaltung, die nur ein Ausführungsbeispiel darstellt, sind in verschiedener Weise möglich. So können beispielsweise die Einschaltzeitpunkte für den Halbleiterschalter 13 in Abhängigkeit der der Brückenschaltung zugeführten Wechselspannung erfolgen, wobei beispielsweise die Null-Durchgänge den Schaltzeitpunkt vorgeben. Weiterhin kann unter Wegfall der Schwellwertstufe 16 der Rücksetzeingang auch direkt mit dem Pluspol der Brückenschaltung verbunden sein, wobei dann beispielsweise ein erneuter Spannungsanstieg ab dem Null-Wert am dynamischen Eingang des Flip-Flops 17 einen Schaltvorgang bewirkt. Anstelle des Flip-Flops 17 kann auch prinzipiell eine logische Verknüpfungsschaltung treten, wobei die als Schmitt-Trigger ausgebildeten Schwellwertstufen entsprechend angepaßte Schaltschwellen aufweisen.

## Patentansprüche

1. Netzteil zur Erzeugung einer geregelten Gleichspannung aus einer Netzwechselspannung, mit einem über eine Gleichrichteranordnung (11) und über eine Diode (14) aufladbaren, die Ausgangsgleichspannung aufweisenden Kondensator (18) und mit einem den Ausgang der Gleichrichteranordnung (11) überbrückenden, in Abhängigkeit eines vorgebbaren Sollwerts (U2) und des Istwerts der Ausgangspannung steuerbaren Halbleiterschalter (13), wobei zwischen dem Netzanschluß und dem Halbleiterschalter (13) wenigstens ein eine Stromüberlastung der Gleichrichteranordnung (11) verhindernder Widerstand (8, 9) vorgesehen ist, dadurch gekennzeichnet, daß dem Halbleiterschalter (13) eine ihn im Zyklus der Netzwechselspannung oder der daraus abgeleiteten gleichgerichteten Spannungshalbwellen im Bereich niedriger Spannung in den stromleitenden Zustand und bei Unterschreitung des vorgebbaren Sollwerts (U2) durch die Ausgangsspannung in den Sperrzustand versetzende Steuervorrichtung (16, 17, 19) zugeordnet ist.

2. Netzteil nach Anspruch 1, dadurch gekennzeichnet, daß die Gleichrichteranordnung (11) als Brückengleichrichter ausgebildet ist.

3. Netzteil nach Anspruch 1 oder 2, dadurch gekennzeichnet, daß das Erreichen oder Unterschreiten eines im Vergleich zur Scheitelspannung sehr geringen Spannungswerts durch die gleichgerichteten Spannungshalbwellen erfaßt und jeweils als den stromleitenden Zustand auslösendes Signal dem Halbleiterschalter (13) zugeführt wird.

4. Netzteil nach Anspruch 3, dadurch gekennzeichnet, daß eine eingangsseitig mit den gleichgerichteten Spannungshalbwellen beaufschlagte, die den stromleitenden Zustand auslösenden Signale erzeugende Schwellwertstufe (16) vorgesehen ist.

5. Netzteil nach einem der vorhergehenden Ansprüche, dadurch gekennzeichnet, daß ein den Sollwert-/Istwert-Vergleich durchführender, insbesondere ist Schwellwertstufe (19) ausgebildeter Komparator vorgesehen ist.

6. Netzteil nach Anspruch 4 oder 5, dadurch gekennzeichnet, daß die Schwellwertstufe (16,19) als Schmitt-Trigger ausgebildet ist.

7. Netzteil nach einem der vorhergehenden Ansprüche, dadurch gekennzeichnet, daß eine die Steuersignale für den Halbleiterschalter (13) speichernde Speichervorrichtung (17) in der Steuervorrichtung vorgesehen ist.

8. Netzteil nach Anspruch 7, dadurch gekennzeichnet, daß die Speichervorrichtung (17) als bistabile Stufe ausgebildet ist.

9. Netzteil nach einem der vorhergehenden Ansprüche, gekennzeichnet durch die Ausbildung der Schwellwertstufen (16,19) und des Speichers (17) als integrierter Schaltkreis oder als Mikrorechner.

10. Netzteil nach einem der vorhergehenden Ansprüche, dadurch gekennzeichnet, daß der Widerstand als ohmscher und/oder kapazitiver Widerstand ausgebildet ist.

11. Netzteil nach Anspruch 10, dadurch gekennzeichnet, daß die Widerstand in eine Wechselstromzuführung zur Gleichrichteranordnung geschaltet ist.

## Claims

1. Power pack for generating a regulated d.c. voltage from a mains a.c. voltage, with a capacitor (18), chargeable via a rectifier assembly (11) and via a diode (14), showing the output d.c. voltage, and with a semiconductor switch (13) bridging the output of the rectifier assembly (11), controllable dependent on a presettable setpoint value (U2) and the actual value of the output voltage, with one or more resistors (8, 9) between the mains connection and the semiconductor switch (13) to prevent current overload of the rectifier assembly (11), characterized in that a control device (16, 17, 19) is assigned to the semiconductor switch (13), moving it into the off state through the output voltage in the low voltage range in the zero current state and when the presettable setpoint value (U2) is not reached, in the cycle of the mains a.c. voltage or the rectified voltage half-waves derived from it.

2. Power pack according to claim 1, characterized in that the rectifier assembly (11) is designed as a bridge rectifier.

3. Power pack according to claims 1 or 2, characterized in that the reaching or undershooting of a voltage value which is very low in comparison to the peak voltage is detected by the rectified voltage half-waves and fed to the semiconductor switch (13) in each case as the signal triggering the current-conducting state.

4. Power pack according to claim 3, characterized in that a threshold stage (16) generating the signals triggering the current-conducting state and receiving on the input side the rectified voltage half-waves, is provided.

5. Power pack according to any of the preceding claims, characterized in that a comparator, in particular in the form of a threshold stage (19), which makes the setpoint value/actual value comparison, is provided.

6. Power pack according to claims 4 or 5, characterized in that the threshold stage (16, 19)is designed as a Schmitt trigger.

7. Power pack according to any of the preceding claims, characterized in that a memory device (17) storing the control signals for the semiconductor switch (13) is provided in the control device.

8. Power pack according to claim 7, characterized in that the memory device (17) is designed as a bistable stage.

9. Power pack according to any of the preceding claims, characterized in that the threshold stages (16, 19) and the memory (17) are in the form of an integrated circuit or a microcomputer.

10. Power pack according to any of the preceding claims, characterized in that the resistor is designed as an ohmic and/or capacitative resistor.

11. Power pack according to claim 10, characterized in that the resistor is connected into an a.c. feed to the rectifier assembly.

## Revendications

1. Bloc d'alimentation destiné à produire une tension électrique continue régulée à partir d'une tension alternative de réseau, comprenant un condensateur (18) pouvant être chargé par l'intermédiaire d'un redresseur de courant (11) et d'une diode (14) et donnant la tension continue de sortie, et comprenant un commutateur à semi-conducteurs (13) court-circuitant la sortie du redresseur de courant (11) et pouvant être commandé en fonction d'une valeur de consigne (U2) pouvant être prédéterminée, et de la valeur effective de la tension de sortie, au moins une résistance (8, 9) étant prévue entre le raccordement au réseau et le commutateur à semi-conducteurs (13) pour empêcher une surcharge de courant du redresseur de courant (11), caractérisé en ce qu'est associé au commutateur à semi-conducteurs (13) un dispositif de commande (16, 17, 19), le faisant passer, au cours du cycle de la tension alternative de réseau ou de celui des demi-ondes de tension redressées dérivant de celui-ci, à l'état conducteur de courant dans la zone de basse tension, et à l'état bloqué lorsque la tension de sortie se trouve en-dessous de la valeur de consigne (U2) pouvant être prédéterminée.

2. Bloc d'alimentation selon la revendication 1, caractérisé en ce que le redresseur de courant (11) est conformé en redresseur à pont.

3. Bloc d'alimentation selon la revendication 1 ou 2, caractérisé en ce que, lorsque les demi-ondes de tension redressées atteignent ou se situent en-dessous d'une valeur de tension très basse en comparaison de la tension de crête, cette information est saisie et systématiquement transmise au commutateur à semiconducteurs (13) en tant que signal déclenchant l'état conducteur de courant.

4. Bloc d'alimentation selon la revendication 3, caractérisé en ce qu'est prévu un étage à seuil (16) recevant, du côté de l'entrée, les demi-ondes de tension redressées, et produisant les signaux déclenchant l'état conducteur de courant.

5. Bloc d'alimentation selon l'une des revendications précédentes, caractérisé en ce qu'est prévu un comparateur effectuant la comparaison entre la valeur de consigne et la valeur effective, conformé en particulier en étage à seuil (19).

6. Bloc d'alimentation selon la revendication 4 ou 5, caractérisé en ce que l'étage à seuil (16, 19) est conformé en trigger de Schmitt.

7. Bloc d'alimentation selon l'une des revendications précédentes, caractérisé en ce qu'est prévue, dans le dispositif de commande, une mémoire (17) stockant les signaux de commande pour le commutateur à semi-conducteurs (13).

8. Bloc d'alimentation selon la revendication 7, caractérisé en ce que la mémoire (17) est conformée en étage bistable.

9. Bloc d'alimentation selon l'une des revendications précédentes, caractérisé en ce que les étages à seuil (16, 19) et la mémoire (17) sont conformés en circuits intégrés ou en micro-calculateurs.

10. Bloc d'alimentation selon l'une des revendications précédentes, caractérisé en ce que la résistance est conformée en résistance ohmique et/ou en résistance capacitive.

11. Bloc d'alimentation selon la revendication 10, caractérisé en ce que la résistance est branchée sur une amenée de courant alternatif au redresseur de courant.
